(19) Europäisches Patentamt
European Patent Office
Office européen des brevets

(11) EP 2 717 381 A1

(12) EUROPEAN PATENT APPLICATION

(43) Date of publication:
09.04.2014 Bulletin 2014/15

(51) Int Cl.:
H01Q 1/32 (2006.01)  H01Q 1/42 (2006.01)

(21) Application number: 13184563.8

(22) Date of filing: 16.09.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 02.10.2012 US 201213633455

(71) Applicant: Delphi Technologies, Inc.
Troy MI 48007 (US)
(72) Inventors:
• Shi, Shawn
Thousand Oaks, CA California 91320 (US)
• Vess, David Jay
Kokomo, IN Indiana 46902 (US)

(74) Representative: Robert, Vincent et al
Delphi France SAS - IP Department
Bât. Le Raspail - ZAC Paris Nord 2
22 avenue des Nations
CS 65059 Villepinte
95972 Roissy CDG Cedex (FR)

(54) **Radome for a radar sensor assembly**

(57) A radome (26) for a radar sensor (24) that includes a first and second section (34). Each section is formed of layers that have an electrical thickness substantially equal to an integer multiple of a guided half-wavelengths of the radar beam (14). Each of the sections (62A) are configured such that, at a location (52) spaced apart from the radome (26), a first phase angle of the first portion (32) of the radar beam (14) differs from a second phase angle of the second portion (36) of the radar beam (14) by an amount substantially corresponding to an integer number of three hundred sixty degrees (360°) of phase angle shift.

FIG. 3

**Description**

TECHNICAL FIELD OF INVENTION

This disclosure generally relates to a radome for a radar sensor assembly, and more particularly relates to a radome that does not have uniform thickness, but does not distort the radar beam from the radar sensor.

BACKGROUND OF INVENTION

It is known to form a radome for a radar sensor using a uniform thickness layer of dielectric material. Using a uniform thickness avoids distorting the radar beam emitted by the radar sensor, and avoids distorting the reflected radar beam reflected by a target in the field of view of the radar sensor. In other words, it is desirable for the radome to be electromagnetically uniform. However, when a radar sensor is adapted for use on a vehicle, it may not be convenient or feasible to provide a uniform radome when the radome is part of the exterior of the vehicle. For example, it may be desirable to locate the radar sensor behind a fascia of a front bumper assembly on the vehicle to detect object in front the vehicle. For aesthetic reasons, the bumper fascia may have ribs, undulations, or logos that could lead to a radome that is not physically uniform.

SUMMARY OF THE INVENTION

Described herein is a radome includes aesthetic features on the exposed surface of the radome that are configured to minimize distortion of the radar beam.

In accordance with one embodiment, a radome for a radar sensor configured to emit a radar beam is provided. The radome includes a first section and a second section. A first portion of the radar beam passes through the first section of the radome. The first section includes a first layer formed of a first dielectric material characterized as having a first thickness substantially equal to an integer multiple of a guided half-wavelengths of the radar beam. A second portion of the radar beam distinct from the first portion passes through the second section of the radome. The second section includes an extension of the first layer present in the first section, and a second layer not present in the first section. The second layer is formed of second dielectric material characterized as having a second thickness substantially equal to an integer multiple of a guided half-wavelengths of the radar beam. The first section and the second section are configured such that, at a location spaced apart from the radome, a first phase angle of the first portion of the radar beam differs from a second phase angle of the second portion of the radar beam by an amount substantially corresponding to an integer number of three hundred sixty degrees (360°) of phase angle shift.

In accordance with one embodiment, a sensor assembly is provided. The sensor assembly includes a radar sensor and a radome that includes a first section and a second section. The radar sensor is configured to emit a radar beam toward a radar field of view and receive a reflected radar signal from the radar field of view. The radome is interposed in the radar field of view. A first portion of the radar beam passes through the first section of the radome. The first section includes a first layer formed of a first dielectric material characterized as having a first thickness substantially equal to an integer multiple of a guided half-wavelengths of the radar beam. A second portion of the radar beam distinct from the first portion passes through the second section of the radome. The second section includes an extension of the first layer present in the first section, and a second layer not present in the first section. The second layer is formed of second dielectric material characterized as having a second thickness substantially equal to an integer multiple of a guided half-wavelengths of the radar beam. The first section and the second section are configured such that, at a location spaced apart from the radome, a first phase angle of the first portion of the radar beam differs from a second phase angle of the second portion of the radar beam by an amount substantially corresponding to an integer number of three hundred sixty degrees (360°) of phase angle shift.

Further features and advantages will appear more clearly on a reading of the following detailed description of the preferred embodiment, which is given by way of non-limiting example only and with reference to the accompanying drawings.

BRIEF DESCRIPTION OF DRAWINGS

The present invention will now be described, by way of example with reference to the accompanying drawings, in which:

Fig. 1 is a side view of a vehicle equipped with a radar sensor assembly in accordance with one embodiment;

Fig. 2 is a front view of the radar sensor assembly of Fig. 1 in accordance with one embodiment;

Fig. 3 is a sectional side view of the radar sensor assembly of Fig. 1 in accordance with one embodiment; and

Fig. 4 is a sectional view of a radar sensor assembly with a generalized radome in accordance with one embodiment.

DETAILED DESCRIPTION

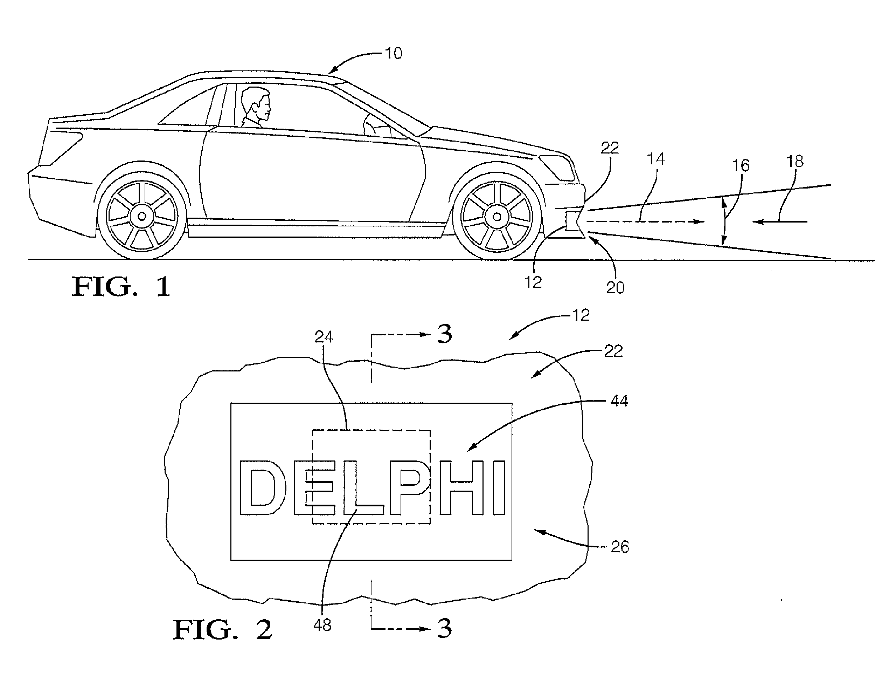

Fig. 1 illustrates a non-limiting example of a vehicle 10 equipped with a radar sensor assembly, hereafter the assembly 12. In general, the assembly is configured to project or emit a radar beam 14 toward a radar field of view 16 and receive a reflected radar signal 18 from the radar field of view 16, as is well known. The assembly 12 is illustrated as being part of a front bumper assembly 20 of the vehicle 10, in particular including part of a fascia 22 of the front bumper assembly. However, other locations on the vehicle (e.g. rear bumper assembly) and non-vehicle applications such as building security proximity detectors are contemplated.

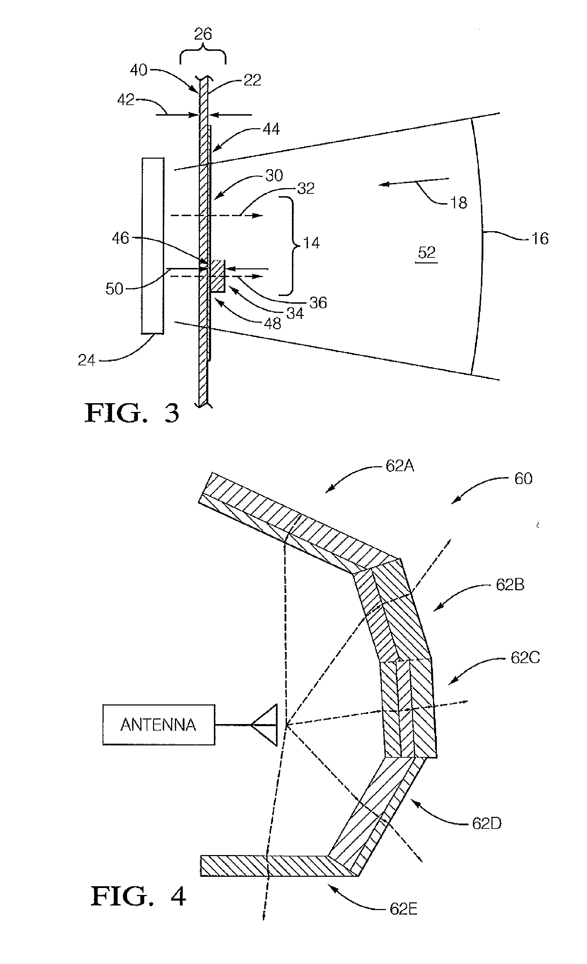

Figs. 2 and 3 illustrate a non-limiting example of a front view and a sectional side view of the assembly 12. In general, the assembly 12 includes a radar sensor 24 configured to emit the radar beam 14 toward the radar field of view 16 and receive the reflected radar signal 18 from the radar field of view 16. By way of example and not limitation, the radar sensor 24 may be a planar type radar sensor that uses a printed circuit board as a surface for defining shaped metal foil antenna and for mounting electronics (not shown). Alternatively, the radar sensor 24 may have a horn (not shown) or other known features for emitting the radar beam 14 and receiving the reflected radar signal 18.

Typically, the assembly 12 includes a radome 26 interposed in the radar field of view 16. In general, the radome 26 is provided to protect the radar sensor 24 from contamination or damage by foreign objects such as bugs, dirt, stones that could impact the radar sensor 24 when the assembly 12 is part of the front bumper assembly 20. The radome 26 may also provide decorative features to highlight the presence of the radar sensor 24, or camouflage the presence of the radar sensor 24. As part of the front bumper assembly 20, the decorative features may be ribs or other undulations in the radome 26 that are dictated by aesthetic design requirements.

Prior art radomes are typically uniform in thickness so that the radome is electromagnetically uniform and so does not substantially distort the radar beam. However, if a company logo or other aesthetic feature on the radome 26 is desired, the radome may be characterized as having a first section 30 of the radome 26 through which passes a first portion 32 of the radar beam 14, and a second section 34 of the radome 26 through which passes a second portion 36 of the radar beam 14 distinct from the first portion 32. As will be described in more detail below, the first section 30 and the second section 34 are preferable configured to so that the radar beam 14 is not substantially distorted after passing through the radome 26 even though the radome 26 is not uniformly thick. By way of example and not limitation, distortion may be minimized if the radome 26 is configured such that after the first portion 32 of the radar beam 14 passes through the radome 26, a first phase angle of the first portion 32 of the radar beam 14 is shifted so that the first phase angle differs from a second phase angle of the second portion 36 of the radar beam 14 by an amount substantially corresponding to an integer number of three hundred sixty degrees (360°) of phase angle shift. It should be recognized that by shifting the first phase angle an integer multiple of 360° (i.e. $2\pi$ when the units are radians), that the first portion 32 and the second portion 36 will generally be in phase with each other, and so the radome 26 can seem to be invisible to the radar beam 14 or the radar sensor 24.

In this non-limiting example the first section 30 is generally formed by a first layer 40 of a first dielectric material characterized as having a first thickness 42. It is preferable for the first layer 40 to be formed of a low loss material for less attenuation, and that the material thickness of the first layer 40, or any layer of the radome 26, formed of the same material correspond to an integer multiple of guided half-wavelengths for minimum reflection. As used herein, integer multiple(s) of guided half-wavelengths refers to the number of half-wavelengths present in a layer of dielectric material guiding the radar beam through the thickness of the layer. As such, a design constraint for the first layer 40 may be determined using Equation 1 below.

$$T = h * \lambda o / 2 / ((\varepsilon r - ((\sin\theta)^{\wedge}2)) ^{\wedge}0.5) \qquad \text{Eq. 1}$$

Where: h=1, 2, 3, ... (number of half-wavelengths); $\theta$ is the angle of incidence; $\varepsilon r$ is the relative dielectric constant of the material used to form the first layer 40, or any layer of the radome 26; and $\lambda o$ is the free space wavelength of the radar beam 56.

In one embodiment, the fascia 22 itself may be the selected to be have a thickness correspond to an integer multiple of guided half-wavelengths. However, as the general thickness of the fascia 22 is often determined by other vehicle design constraints, and so the first layer 40 may include a fascia supplement 44 overlying the fascia 22. The fascia supplement 44 may be selected to have a supplement thickness such that the combination of the fascia 22 and the fascia supplement 44 has a first thickness 42 substantially equal to an integer multiple of a guided half-wavelengths of the radar beam 14. It should be recognized that the fascia supplement 44 is preferably formed of the same material as the fascia 22 to minimize reflections of the radar beam 14 at the boundary between the fascia 22 and the fascia supplement 44. In addition, if the fascia supplement 44 is bonded to the fascia 22 after the fascia 22 is formed, the bonding process should be such that the boundary itself does not introduce a discontinuity sufficient to cause a substantial reflection. By way of example and not limitation, the fascia supplement 44 may be bonded to the fascia using a hotmelt process that 'irons' the fascia supplement to the fascia 22.

Continuing to refer to Figs. 2 and 3, the radome 26 may include the second section 34 of the radome 26 through which passes a second portion 36 of the radar beam 14 distinct from the first portion 32. In this non-limiting example, the second section conveniently includes an extension 46 of the first layer 40 present in the first section 30. In order to form a company logo or other decorative feature on the radome 26, the second section 34 may include a second layer 48 that is not present in the first section 30. In general, the second layer 48 is formed of second dielectric material that preferably has a second thickness 50 substantially equal to an integer multiple of a guided half-wavelengths of the radar beam, in accordance with Equation 1 for example. As suggested above, the first section 30 and the second section 34 are preferably configured such that, at a location 52 spaced apart from the radome 26, a first phase angle of the first portion 32 of the radar beam 14 differs from a second phase angle of the second portion 36 of the radar beam 14 by an amount substantially corresponding to an integer number of three hundred sixty degrees (360°) of phase angle shift. As used herein, substantially corresponding means that the signals are in-phase as much as is possible within the design constraints of the radome 26. It is recognized that some deviation from exactly an integer number of three hundred sixty degrees (360°) of phase angle shift can be tolerated, but that the greater the deviation, the greater the radar beam 14 is distorted when compared to a completely uniform radome.

It was discovered that by suitably selecting materials and thickness dimensions, a radome 26 may be formed that avoids the problem of radar beam distortion caused by aesthetic features described above. Given this discovery, some design constraints are relaxed so that an aesthetically pleasing radome 26 can be designed that minimizes radar beam distortion. To satisfy the desire for a phase difference of an integer number of 360°, Equation 2 must be satisfied.

$$Mj-Mk=2n \qquad\qquad Eq.\ 2$$

Where j and k denote two distinct sections (e.g. the first section 30 and the second section 34); Mj (or Mk) is the total number of guided half-wavelengths in section j (or section k); $n = 0, +/-1, +/-2, ....$ (an integer value). Giving $\theta$ and $\varepsilon r$, one can determine T for a layer from Eq. 1; and Eq. 2 defines total guided half wavelength for each section. Multiple solutions are available due to different choice of h and n, which offers the design flexibility.

By way of example and not limitation, for a $76.5 * 10^9$ Hertz (76.5GHz) radar beam located behind the fascia 22 formed of Polypropylene / ethylene propylene diene monomer (PP/EPDM) having a thickness of 3 mm and a relative dielectric constant ($\varepsilon r$) of 2.6, the fascia supplement 44 may suitably be the same material as the fascia with a thickness of 0.65mm to satisfy Equation 1, for h=3, and assuming $\theta$=0 (normal incidence). Then if the second layer 48 (i.e. a company logo) is formed of Bayblend-T65 from Bayer Material Science AG of Leverkusen, Germany, that has a relative dielectric constant ($\varepsilon r$) of 2.78, then a second thickness 50 of 2.35 mm satisfies Equations 1 for h=2. There are three guided half wavelengths in the first section, and five in the second section, the difference of total number of guided half wavelength between these two sections is two, satisfying Eq. 2..

Fig. 4 illustrates a non-limiting example of a generalized radome that includes a plurality of sections (62A, 62B, 62C, 62D, 62E) where each of the plurality of sections may include one or more layers of various dielectric materials. The illustration may be a top view or a side view of the generalized radome 60. Each layer preferably satisfies Equation 1 to minimize reflections. Furthermore, each combination of layers forming a section provides a total phase delay that differ by an integer number of 360° from any of the other sections forming the generalized radome 60.

Accordingly, a radome 26, and radar sensor assembly 12, and a generalized radome 60 is provided. The radome 26 described herein provides for a radome that is not constrained to having a uniform thickness of material across the entire radome to minimize radar signal distortion.

While this invention has been described in terms of the preferred embodiments thereof, it is not intended to be so limited, but rather only to the extent set forth in the claims that follow.

**Claims**

1.  A radome (26) for a radar sensor (24) configured to emit a radar beam (14), said radome (26) comprising:

    a first section (30) of the radome (26) through which passes a first portion (32) of the radar beam (14), wherein the first section (30) comprises a first layer (40) formed of a first dielectric material characterized as having a first thickness (42) substantially equal to an integer multiple of a guided half-wavelengths of the radar beam (14); and

a second section (34) of the radome (26) through which passes a second portion (36) of the radar beam (14) distinct from the first portion (32), wherein the second section (34) comprises an extension (46) of the first layer (40) present in the first section (30), and a second layer (48) not present in the first section (30), wherein the second layer (48) is formed of second dielectric material characterized as having a second thickness (50) substantially equal to an integer multiple of a guided half-wavelengths of the radar beam (14), wherein the first section (30) and the second section (34) are configured such that, at a location (52) spaced apart from the radome (26), a first phase angle of the first portion (32) of the radar beam (14) differs from a second phase angle of the second portion (36) of the radar beam (14) by an amount substantially corresponding to an integer number of three hundred sixty degrees (360°) of phase angle shift.

2. The radome (26) in accordance with claim 1, wherein the first layer (40) includes a fascia (22) of a vehicle (10) bumper assembly (12).

3. The radome (26) in accordance with claim 2, wherein the first layer (40) includes a fascia supplement (44) overlying the fascia (22), wherein the fascia supplement (44) has a supplement thickness such that the combination of the fascia (22) and the fascia supplement (44) characterized as having a first thickness (42) substantially equal to an integer multiple of a guided half-wavelengths of the radar beam (14).

4. A radar sensor assembly (12) comprising:

a radar sensor (24) configured to emit a radar beam (14) toward a radar field of view (16) and receive a reflected radar signal (18) from the radar field of view (16); and
a radome (26) interposed in the radar field of view (16), said radome (26) comprising:

a first section (30) of the radome (26) through which passes a first portion (32) of the radar beam (14), wherein the first section (30) comprises a first layer (40) formed of a first dielectric material characterized as having a first thickness (42) substantially equal to an integer multiple of a guided half-wavelengths of the radar beam (14), and

a second section (34) of the radome (26) through which passes a second portion (36) of the radar beam (14) distinct from the first portion (32), wherein the second section (34) comprises an extension (46) of the first layer (40) present in the first section (30), and a second layer (48) not present in the first section (30), wherein the second layer (48) is formed of second dielectric material characterized as having a second thickness (50) substantially equal to an integer multiple of a guided half-wavelengths of the radar beam (14), wherein the first section (30) and the second section (34) are configured such that, at a location (52) spaced apart from the radome (26), a first phase angle of the first portion (32) of the radar beam (14) differs from a second phase angle of the second portion (36) of the radar beam (14) by an amount substantially corresponding to an integer number of three hundred sixty degrees (360°) of phase angle shift.

FIG. 1

FIG. 2

EP 2 717 381 A1

**FIG. 3**

**FIG. 4**

EP 2 717 381 A1

| | Europäisches Patentamt / European Patent Office / Office européen des brevets | **EUROPEAN SEARCH REPORT** | Application Number EP 13 18 4563 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2003 142917 A (ANTEN CORP) 16 May 2003 (2003-05-16) | 1 | INV. H01Q1/32 H01Q1/42 |
| Y | * abstract; figure 4 * | 1-4 | |
| Y | US 2009/140912 A1 (KATO YUSUKE [JP] ET AL) 4 June 2009 (2009-06-04) * paragraph [0079]; figures 4,5 * | 1-4 | |
| X | JP H06 224614 A (MITSUBISHI ELECTRIC CORP) 12 August 1994 (1994-08-12) * abstract; figure 1 * | 1,4 | |
| A | EP 2 151 888 A1 (AUDI NSU AUTO UNION AG [DE]) 10 February 2010 (2010-02-10) * abstract * | 1-4 | |

TECHNICAL FIELDS SEARCHED (IPC)

H01Q

The present search report has been drawn up for all claims

| Place of search | Date of completion of the search | Examiner |
|---|---|---|
| Munich | 10 January 2014 | Kaleve, Abraham |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 18 4563

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2014

| Patent document cited in search report | | Publication date | Patent family member(s) | | Publication date |
|---|---|---|---|---|---|
| JP 2003142917 | A | 16-05-2003 | JP<br>JP | 3871255 B2<br>2003142917 A | 24-01-2007<br>16-05-2003 |
| US 2009140912 | A1 | 04-06-2009 | JP<br>JP<br>US | 4497190 B2<br>2009103456 A<br>2009140912 A1 | 07-07-2010<br>14-05-2009<br>04-06-2009 |
| JP H06224614 | A | 12-08-1994 | JP<br>JP | 3246025 B2<br>H06224614 A | 15-01-2002<br>12-08-1994 |
| EP 2151888 | A1 | 10-02-2010 | DE<br>EP | 102008036011 A1<br>2151888 A1 | 11-02-2010<br>10-02-2010 |

EPO FORM P0459

For more details about this annex : see Official Journal of the European Patent Office, No. 12/82